# EUROPÄISCHE PATENTSCHRIFT

(11) **EP 3 009 274 B1**
(45) Veröffentlichungstag und Bekanntmachung des Hinweises auf die Patenterteilung: **28.06.2017**
(21) Anmeldenummer: 15183858.8
(22) Anmeldetag: 04.09.2015
(51) Int. Cl.: B60C 9/20, B60C 9/18, B60C 1/00

(54) **FAHRZEUGLUFTREIFEN**
PNEUMATIC TYRES FOR A VEHICLE
PNEUMATIQUES DE VEHICULE

(30) Priorität: 16.10.2014 DE 102014221044
(43) Veröffentlichungstag der Anmeldung: 20.04.2016
(73) Patentinhaber: Continental Reifen Deutschland GmbH, 30165 Hannover (DE)
(72) Erfinder: Menz, Rüdiger, 30167 Hannover (DE); Dahlke, Markus, 31515 Wunstorf (DE); Tschimmel, Jürgen, 30890 Barsinghausen (DE); Felten, Thomas, 31535 Neustadt (DE)
(74) Vertreter: Widjaja, Wira

(56) Entgegenhaltungen:
- DE-A1- 3 139 770
- DE-T2- 69 706 567
- US-A- 4 273 177

## Beschreibung

Die Erfindung betrifft einen Fahrzeugluftreifen.

Es ist bekannt, bei Fahrzeugreifen die Unterseite des Laufstreifens mit einem Reifengürtel zu versehen.

Ein Nachteil bei der herkömmlichen Konstruktion eines Reifengürtels für Nutzfahrzeugreifen besteht darin, dass der Reifengürtel unter Umständen nur eine begrenzte Lebensdauer hat. Eine bestimmte Anzahl von Nutzfahrzeugreifen muss deshalb ausgetauscht werden, weil der Reifengürtel nach einer bestimmten Lebensdauer irrreversible Schäden aufweist.

Diese Schäden kommen unter anderem dadurch zustande, dass es im Bereich der Grütelkanten zu einer Rissbildung kommen kann. Eine solche Rissbildung kann zu einem irreversiblen Schaden des Reifens führen.

Der Erfindung liegt daher die Aufgabe zu Grunde, einen Fahrzeugluftreifen zu schaffen, der eine hohe Gürtelhaltbarkeit besitzt.

Gelöst wird die Aufgabe gemäß den kennzeichnenden Merkmalen des Anspruchs 1 dadurch, dass die Randbereiche von mindestens einer Gürtellage mit einem kompressiblen Material mit kleinen eingeschlossenen Luftbläschen versehen ist, wodurch bei einer Belastung des Fahrzeugreifens Materialspannungen in den Gürtelkanten reduziert werden.

Ein Vorteil des erfindungsgemäßen Fahrzeugreifens ist insbesondere darin zu sehen, dass der erfindungsgemäße Fahrzeugluftreifen eine gegenüber herkömmlichen Nutzfahrzeugreifen wesentlich höhere Gürtelhaltbarkeit aufweist. Die höhere Gürtelhaltbarkeit ist auf die besondere Gürtelkonstruktion zurückzuführen, wodurch eine Rissbildung in den Randbereichen der Gürtellage in hohem Maße unterbunden wird. Das Material mit den kleinen eingeschlossenen Luftbläschen in den Randbereichen der Gürtellage weist im Gegensatz zu herkömmlichem Gummimaterial ein kompressibles Werkstoffverhalten auf. Auf diese Weise kann der hydrostatische Zugzustand in den Randbereichen der Gürtellage deutlich reduziert werden. Hydrostaischer Zug hat eine besonders schädigende Wirkung auf Gummi. Die reduzierten Materialspannungen in den Randbereichen der Gürtellagen führen dazu, dass der Reifengürtel insgesamt eine höhere Dauerhaltbarkeit besitzt.

In einer vorteilhaften Weiterbildung der Erfindung ist vorgesehen, dass das kompressible Material aus einem geschäumten Gummimaterial besteht. Das geschäumte Gummimaterial hat den Vorteil, dass sich dieses Material in den Randbereichen der Gürtellage gut anbinden lässt. Außerdem besitzt dieses Material keine negativen Eigenschaften gegenüber den umliegenden Bauteilen aus Gummi.

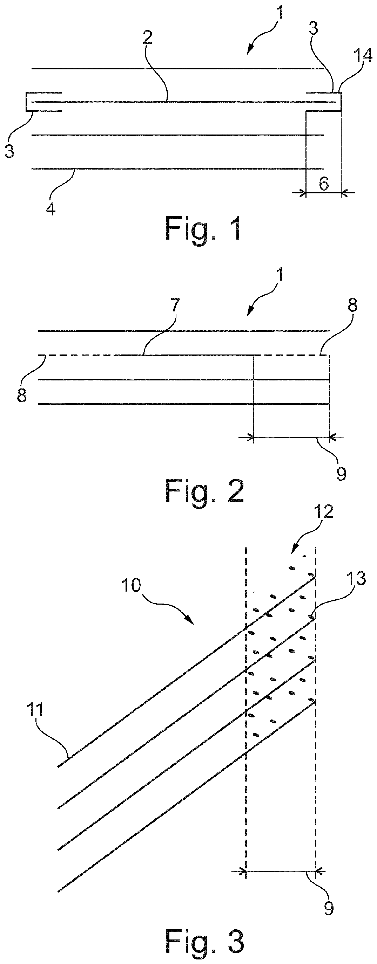

In einer weiteren vorteilhaften Weiterbildung der Erfindung ist vorgesehen, dass das geschäumte Gummimaterial in Form einer separaten Materiallage einen Bereich der Gürtelkanten ummantelt.
Ein entsprechendes Ausführungsbeispiel ist in der Figur 1 dargestellt. Durch die Ummantelung der Gürtelkanten mit der separaten Materiallage werden die auftretenden Materialspannungen in diesen Bereichen des Gürtels deutlich reduziert.

In einer weiteren vorteilhaften Weiterbildung der Erfindung ist vorgesehen, dass die separate Materiallage mit dem geschäumten Gummimaterial ca. 10 bis 30 mm der Randbereiche einer Gürtellage abdecken.

In diesem Randbereich der Gürtellage ist es besonders wichtig, die auftretenden Materialspannungen zu reduzieren, um eine hohe Dauerhaltbarkeit des Reifengürtels zu gewährleisten.

In einer weiteren vorteilhaften Weiterbildung der Erfindung ist vorgesehen, dass der Materialstreifen aus einem geschäumten Kunststoff besteht. Geschäumter Kunststoff weist ebenfalls ein dekompressibles Materialverhalten auf und lässt sich relativ einfach in die Reifengürtelkonstruktion einbinden.

In einer weiteren vorteilhaften Weiterbildung der Erfindung ist vorgesehen, dass der Materialstreifen eine Materialdicke zwischen ca. 1 und 3 mm besitzt. Dadurch lässt sich der Materialstreifen auf einfache Weise im Randbereich der Gürtellage anordnen.

In einer weiteren vorteilhaften Weiterbildung der Erfindung ist vorgesehen, dass die Gummierung von mindestens einer Gürtellage aus unterschiedlichen Gummimaterialien besteht, wobei zumindestens die Randbereiche der Gürtellage geschäumtes Gummimaterial aufweisen.
Ein entsprechendes Ausführungsbeispiel ist in der Figur 2 gezeigt. Dadurch wird das Auflegen der einzelnen Gürtellagen auf der Gürteltrommel vereinfacht. Im Gegensatz zum Ausführungsbeispiel in der Figur 1 ist es nicht notwendig, eine separate Materiallage um die Gürtelkante herumzuschlagen.

In einer weiteren vorteilhaften Weiterbildung der Erfindung ist vorgesehen, dass die Randbereiche der Gürtellage mit geschäumten Gummimaterial eine Breite zwischen 10 und 50 mm, vorzugsweise ca. 30 mm, aufweisen.
Dadurch werden die auftretenden Materialspannungen in den Randbereichen der Gürtellage deutlich reduziert.

In einer weiteren vorteilhaften Weiterbildung der Erfindung ist vorgesehen, dass der Fahrzeugluftreifen ein Nutzfahrzeugreifen ist und die 3. Gürtellage in den Randbereichen geschäumtes Gummimaterial aufweist.
Bei Nutzfahrzeugreifen ist es besonders wichtig, die Materialspannungen in den Randbereichen der dritten Gürtellage zu reduzieren. Erfahrungswerte zeigen, dass die Randbereiche der dritten Gürtellage besonders hohen Materialspannungen ausgesetzt sind.

In einer weiteren vorteilhaften Weiterbildung der Erfindung ist vorgesehen, dass das geschäumte Gummimaterial mit bei der Reifenvulkanisation aufblähbaren Microspheren erzeugt wird.
Mit den aufblähbaren Microspheren lässt sich das geschäumte Gummimaterial einfach herstellen.

Anhand eines Ausführungsbeispieles soll die Erfindung näher erläutert werden. Es zeigt:
- Fig. 1: Ein Ausführungsbeispiel der Gürtelkonstruktion in einer Radialschnittansicht
- Fig. 2: Ein weiteres Ausführungsbeispiel für eine Reifengürtelkonstruktion
- Fig. 3: Die dritte Gürtellage aus dem Ausführungsbeispiel in der Figur 2 in einer Aufsicht

Die Figur 1 zeigt in einer schematischen Darstellung den Reifengürtel 1 in einer Radialschnittansicht. Bei diesem Ausführungsbeispiel ist die dritte Gürtellage 2 in den Randbereichen jeweils mit einer separaten Materiallage 3 versehen. Die separate Materiallage 3 besteht aus einem geschäumten Gummimaterial, welches ein kompressibles Werkstoffverhalten aufweist. Die Breite des Randbereiches 6 der dritten Gürtellage, die mit der Materiallage 3 ummantelt ist, beträgt ca. 10 bis 30 mm. Durch die kompressible Materiallage werden die in den Randbereichen auftretenden Materialspannungen deutlich reduziert.

Die Figur 2 zeigt ein zweites Ausführungsbeispiel des Reifengürtels 1. Bei dieser Ausführung besitzt die dritte Gürtellage 7 eine Gummierung, die aus unterschiedlichen Gummimaterialien besteht. Die mit der gestrichelten Linie dargestellten Randbereiche 8 weisen als Gummierung ein geschäumtes Gummimaterial auf. Diese besondere Art der Gürtellagengummierung wird bereits bei der Herstellung der einzelnen Gürtellagen umgesetzt. Die Breite 9 des Randbereiches 8 beträgt ca. 30 mm.

Die Figur 3 zeigt die dritte Gürtellage 10 aus dem Ausführungsbeispiel in der Figur 2 in der Aufsicht. Die parallel verlaufenden einzelnen Festigkeitsträger 11 verlaufen in einem vorgegebenen Winkel zur Umfangsrichtung. Das geschäumte Gummimaterial 12 ist ausschließlich in den Randbereichen der dritten Gürtellage angeordnet. Die Luftbläschen 13 im Gummimaterial 12 sind schematisch dargestellt und können auch in den Zwischenräumen zwischen den Festigkeitsträgern angeordnet sein.

### Bezugszeichenliste

- 1: Reifengürtel in der Radial-Schnittansicht
- 2: dritte Gürtellage
- 3: separaten Materiallage mit geschäumten Gummimaterial
- 4: erste unterste Gürtellage
- 5: vierte oberste Gürtellage
- 6: Randbereich der 3. Gürtellage, die mit der Materiallage ummantelt ist (ca. 10 - 30 mm)
- 7: dritte Gürtellage mit einer Gummierung aus unterschiedlichen Gummimaterialien
- 8: Randbereiche der Gürtellage mit geschäumten Gummimaterial
- 9: Breite des Randbereiches (ca. 30 mm)
- 10: dritte Gürtellage in der Aufsicht
- 11: Einzelner Festigkeitsträger der Gürtellage
- 12: geschäumtes Gummimaterial in den Randbereichen der Gürtellage
- 13: Luftbläschen im Gummimaterial
- 14: Gürtelkante

## Patentansprüche

1. Fahrzeugluftreifen mit einem Laufstreifen, einer Reifenseitenwand und einem Reifenwulst mit einem Kern, einem Kernprofil und einem Reifengürtel,
wobei der Reifengürtel (1) eine Vielzahl von übereinander liegenden einzelnen Gürtellagen (3, 4) umfasst,
wobei jede Gürtellage (3, 4) eine Vielzahl von parallel verlaufenden einzelnen Festigkeitsträgern (11) umfasst,
wobei der Reifengürtel (1) zwischen der Reifenkarkasse und dem Laufstreifen angeordnet ist,
**dadurch gekennzeichnet, dass**
die Randbereiche (6, 8) von mindestens einer Gürtellage (3) mit einem kompressiblen Material mit kleinen eingeschlossenen Luftbläschen (13) versehen ist, wodurch bei einer Belastung des Fahrzeugreifens Materialspannungen in den Gürtelkanten (14) reduziert werden.

2. Fahrzeugluftreifen nach Anspruch 1,
**dadurch gekennzeichnet, dass**
das kompressible Material aus einem geschäumten Gummimaterial (12) besteht.

3. Fahrzeugluftreifen nach einem der vorhergehenden Ansprüche,
**dadurch gekennzeichnet, dass**
das geschäumte Gummimaterial in Form einer separaten Materiallage (3) einen Bereich der Gürtelkanten (4) ummantelt.

4. Fahrzeugluftreifen nach einem der vorhergehenden Ansprüche,
**dadurch gekennzeichnet, dass**
die separaten Materiallage (3) mit dem geschäumten Gummimaterial ca. 10 bis 30 mm der Randbereiche (6) einer Gürtellage (3) abdecken.

5. Fahrzeugluftreifen nach einem der vorhergehenden Ansprüche,
**dadurch gekennzeichnet, dass**
die separaten Materiallage (3) mit dem geschäumten Gummimaterial eine Materialdicke zwischen ca. 1 und 3 mm besitzt.

6. Fahrzeugluftreifen nach einem der vorhergehenden Ansprüche,
**dadurch gekennzeichnet, dass**
die Gummierung von mindestens einer Gürtellage (2) aus unterschiedlichen Gummimaterialien besteht, wobei zumindestens die Randbereiche (8) der Gürtellage geschäumtes Gummimaterial (12) aufweisen.

7. Fahrzeugluftreifen nach einem der vorhergehenden Ansprüche,
**dadurch gekennzeichnet, dass**
die Randbereiche (8) der Gürtellage (2) mit geschäumten Gummimaterial (12) eine Breite (9) zwischen 10 und 50 mm, vorzugsweise ca. 30 mm, aufweisen.

8. Fahrzeugluftreifen nach einem der vorhergehenden Ansprüche,
**dadurch gekennzeichnet, dass**
das kompressible Material aus einem geschäumten Kunststoff besteht.

9. Fahrzeugluftreifen nach einem der vorhergehenden Ansprüche,
**dadurch gekennzeichnet, dass**
der Fahrzeugluftreifen ein Nutzfahrzeugreifen ist und die 3. Gürtellage (2) in den Randbereichen (6, 8) geschäumtes Gummimaterial aufweist.

10. Fahrzeugluftreifen nach einem der vorhergehenden Ansprüche,
**dadurch gekennzeichnet, dass**
der Fahrzeugluftreifen ein Nutzfahrzeugreifen ist und die 2. Gürtellage (2) in den Randbereichen (6, 8) geschäumtes Gummimaterial aufweist.

11. Fahrzeugluftreifen nach einem der vorhergehenden Ansprüche,
**dadurch gekennzeichnet, dass**
das geschäumte Gummimaterial (12) mit bei der Reifenvulkanisation aufblähbaren Microspheren erzeugt wird.

## Claims

1. Pneumatic vehicle tyre with a tread, a tyre sidewall and a tyre bead with a core, a bead filler and a breaker belt,
the breaker belt (1) comprising a multiplicity of individual belt plies (3, 4) lying one on top of the other,
each belt ply (3, 4) comprising a multiplicity of parallel running individual reinforcing elements (11),
the breaker belt (1) being arranged between the tyre carcass and the tread,
**characterized in that**
the peripheral regions (6, 8) of at least one belt ply (3) are provided with a compressible material with small enclosed air bubbles (13), whereby material stresses in the belt edges (14) when the vehicle tyre is under load are reduced.

2. Pneumatic vehicle tyre according to Claim 1,
**characterized in that**
the compressible material consists of an expanded rubber material (12).

3. Pneumatic vehicle tyre according to one of the preceding claims,
**characterized in that**
the expanded rubber material in the form of a separate material ply (3) encloses a region of the belt edges (4).

4. Pneumatic vehicle tyre according to one of the preceding claims,
**characterized in that**
the separate material ply (3) comprising the expanded rubber material covers about 10 to 30 mm of the peripheral regions (6) of a belt ply (3).

5. Pneumatic vehicle tyre according to one of the preceding claims,
**characterized in that**
the separate material ply (3) comprising the expanded rubber material has a material thickness of between about 1 and 3 mm.

6. Pneumatic vehicle tyre according to one of the preceding claims,
**characterized in that**
the rubber covering of at least one belt ply (2) consists of different rubber materials, at least the peripheral regions (8) of the belt ply comprising expanded rubber material (12).

7. Pneumatic vehicle tyre according to one of the preceding claims,
**characterized in that**
the peripheral regions (8) of the belt ply (2) comprising expanded rubber material (12) have a width (9) of between 10 and 50 mm, preferably about 30 mm.

8. Pneumatic vehicle tyre according to one of the preceding claims,
**characterized in that**
the compressible material consists of an expanded plastic.

9. Pneumatic vehicle tyre according to one of the preceding claims,
**characterized in that**
the pneumatic vehicle tyre is a commercial vehicle tyre and the third belt ply (2) comprises expanded rubber material in the peripheral regions (6, 8).

10. Pneumatic vehicle tyre according to one of the preceding claims,
**characterized in that**
the pneumatic vehicle tyre is a commercial vehicle tyre and the second belt ply (2) comprises expanded rubber material in the peripheral regions (6, 8).

11. Pneumatic vehicle tyre according to one of the preceding claims,
**characterized in that**
the expanded rubber material (12) is produced with microspheres that can be inflated during the vulcanizing of the tyre.

## Revendications

1. Bandage pneumatique pour roue de véhicule, présentant une bande de roulement, une paroi latérale de bandage et un bourrelet de bandage doté d'une âme, d'un profil d'âme et d'une ceinture de bandage,
la ceinture (1) de bandage comportant plusieurs couches de ceinture (3, 4) distinctes et posées les unes au-dessus des autres,
chaque couche de ceinture (3, 4) comportant plusieurs renforts (11) distincts s'étendant en parallèle,
la ceinture de bandage (1) étant disposée entre la carcasse du bandage et la bande de roulement, **caractérisé en ce que**
les bordures (6, 8) d'au moins une couche de ceinture (3) sont dotées d'un matériau compressible dans lequel de petites bulles d'air (13) sont incluses, de sorte que lorsque le bandage de roue de véhicule est en charge, les contraintes exercées sur le matériau des bords (14) de la ceinture soient réduites.

2. Bandage pneumatique pour roue de véhicule selon la revendication 1, **caractérisé en ce que** le matériau compressible est constitué d'un matériau (12) à base de caoutchouc moussé.

3. Bandage pneumatique pour roue de véhicule selon l'une des revendications précédentes, **caractérisé en ce que** le matériau de caoutchouc moussé entoure une partie des bords (4) de la ceinture sous la forme d'une couche distincte (3) de matière.

4. Bandage pneumatique pour roue de véhicule selon l'une des revendications précédentes, **caractérisé en ce que** la couche distincte (3) de matière qui présente le matériau de caoutchouc moussé couvre environ 10 à 30 mm des bordures (6) d'une couche de ceinture (3).

5. Bandage pneumatique pour roue de véhicule selon l'une des revendications précédentes, **caractérisé en ce que** la couche distincte (3) de matière présentant le matériau de caoutchouc moussé possède une épaisseur comprise entre environ 1 et 3 mm.

6. Bandage pneumatique pour roue de véhicule selon l'une des revendications précédentes, **caractérisé en ce que** le caoutchoutage d'au moins une couche de ceinture (2) est constitué de différents matériaux de caoutchouc, au moins les bordures (8) de la couche de ceinture présentant un matériau de caoutchouc (12) moussé.

7. Bandage pneumatique pour roue de véhicule selon l'une des revendications précédentes, **caractérisé en ce que** les bordures (8) de la couche de ceinture (2) présentant le matériau de caoutchouc (12) moussé présentent une largeur (9) comprise entre 10 et 50 mm et de préférence d'environ 30 mm.

8. Bandage pneumatique pour roue de véhicule selon l'une des revendications précédentes, **caractérisé en ce que** le matériau compressible est constitué d'une matière synthétique moussée.

9. Bandage pneumatique pour roue de véhicule selon l'une des revendications précédentes, **caractérisé en ce que** le bandage pneumatique pour roue de véhicule est un bandage pour roue de véhicule utilitaire et **en ce que** la 3ème couche de ceinture (2) des bordures (6, 8) présente un matériau de caoutchouc moussé.

10. Bandage pneumatique pour roue de véhicule selon l'une des revendications précédentes, **caractérisé en ce que** le bandage pneumatique pour roue de véhicule est un bandage pour roue de véhicule utilitaire et **en ce que** la 2ème couche de ceinture (2) des bordures (6, 8) présente un matériau de caoutchouc moussé.

11. Bandage pneumatique pour roue de véhicule selon l'une des revendications précédentes, **caractérisé en ce que** le matériau de caoutchouc (12) moussé est formé à l'aide de microsphères qui peuvent être gonflées lors de la vulcanisation du bandage de roue.
